# EUROPEAN PATENT SPECIFICATION

(11) **EP 2 638 277 B1**
(45) Date of publication and mention of the grant of the patent: **14.03.2018**
(21) Application number: 11808265.0
(22) Date of filing: 11.11.2011
(51) Int. Cl.: F03B 13/26, F03B 17/06, E02B 9/08

(54) **TIDAL FLOW GENERATION STRUCTURES**
STRUKTUREN FÜR GEZEITEN-STRÖMUNGSERZEUGUNG
STRUCTURES DE PRODUCTION D'ÉNERGIE MARÉMOTRICE

(30) Priority: 11.11.2010 GB 201019080
(43) Date of publication of application: 18.09.2013
(73) Proprietor: Tidal Energy Limited, Cardiff CF23 8RS (GB)
(72) Inventor: AYRE, Richard, Cardiff Gate Business Park Cardiff CF23 8RS (GB)
(74) Representative: Davies, Gregory Mark
(86) International application number: PCT/GB2011/052197
(87) International publication number: WO 2012/063076

(56) References cited:
- EP-A1- 2 199 602
- WO-A2-2009/081162
- WO-A2-2010/018345
- US-A1- 2008 232 965

## Description

The present invention relates to a tidal flow generation structures.

### Background of The Invention

Tidal energy is to a great extent predictable. At depths below significant wave effects the only basic changes in current flow are due the naturally occurring phases of the moon and sun. Superimposed on this pattern is a variation of flow velocities, some reaching a considerable fraction of the free-stream values, and which are due to intense atmospheric events.

The deterministic nature of the availability of power, together with its high density and the implicit absence of visual impact makes tidal energy extraction a very attractive proposition particularly since virtually the whole of the available resources remain untapped.

A number of tidal turbine schemes have been proposed with a division being between those which require the setting of sea floor foundations and those which do not. US2011/0206467 describes 5 categories of foundation structures for hydraulic turbines, namely, piles, suction anchors, gravity foundations, floating structures and anchored base plates. US2011/0206467 then goes on to describe an anchored base plate structure employing a very heavy central mooring that may partially sink into the sea bed. The base plate foundation is initially anchored in position before being levelled and the turbine then assembled on the already anchored base plate.

Additionally, free standing framework designs have been proposed. An exemplary such structure is disclosed in WO2009/081162. The structure disclosed is deployed to rest on the sea bed and supports multiple turbines. The design benefits from an overarching simplicity of construction and implementation which offers, through the absence of complex failure-prone mechanisms, high inbuilt reliability.

EP2199602A1 relates to a method of securing a hydroelectric turbine at a deployment site. An improved arrangement has now been devised.

### Summary of the Invention

According to a first aspect, there is provided a tidal energy generation structure for sea bed mounting having a plurality of sea bed penetrating support foot structures pre assembled with the structure and deployed with the structure when setting on the sea-bed, the sea bed penetrating support foot structures being assembled in fixed position relative to one another on a rigid frame and including a respective penetrating tip which is arranged to penetrate into the sea bed surface under the weight of the tidal energy generation structure, when deployed on the sea bed, wherein the penetrating tip comprises a generally triangular plate having an apex, wherein the sea bed penetrating support foot structure includes penetration depth limitation means to prevent the tip penetrating beyond a predetermined distance into the sea bed, wherein the penetration depth limitation means comprises a stop, flange disc or plate positioned above the penetrating tip and extending outwardly from the penetrating tip at a position spaced upwardly from the tip.

Because the weight of the entire structure is used to embed the penetrating foot into the sea bed there is no requirement for the penetrating foot structure itself to be particularly massive or heavy. This benefit is not disclosed in the prior art.

According to a further aspect, the invention provides a method of securing a sea bed mounted tidal energy generation structure (1) in position on the sea bed, the method comprising lowering a pre-assembled structure comprising frame connected nacelle structures (14) and a plurality of sea bed penetrating support foot structures (15) pre assembled with the structure, the support foot structures (15) being fixed in position relative to the structure before lowering to the sea bed and including a penetrating tip (25) which is arranged to penetrate into the sea bed to a significant degree under the weight of the tidal energy generation structure, wherein the sea bed mounted tidal energy generation structure (1) is provided with a plurality of spaced support foot structures beneath each frame connected nacelle (9), wherein each spaced support foot structure comprises a respective penetrating tip to enable each of the plurality of spaced support foot structures to penetrate into the sea bed to a significant degree, wherein the penetrating tip (25) comprises a generally triangular plate having an apex, wherein the spaced support foot structures include penetration depth limitation means comprising a stop, flange disc or plate positioned above the penetrating tip (25) and extending outwardly from the penetrating tip (25) at a position spaced upwardly from the tip.

The prior art does not disclose such a technique in which a pre-assembled structure including frame connected nacelles and included penetrating foot structures are lowered ready assembled onto the sea bed to self secure in position without further adjustment. It is preferred that the penetrating tip has opposed inclined surfaces terminating at an apex. The smaller the apex angle between the opposed inclined surfaces, the more significant is the penetration. Accordingly, the apex angle between the opposed inclined surfaces is preferably 70 degrees or less (more preferably 60 degrees or less).

Beneficially, the arrangement is provided with penetration depth limitation means to prevent the tip penetrating beyond a predetermined distance into the sea bed.

In one embodiment the structure comprises a spacer section provided above the penetrating foot. The spacer section provides capture into sedimentary deposits on the sea bed to further secure the structure in position. The spacer section is provided above the penetration depth limitation means.

The spacer section preferably tapers from a relatively wide upper portion to a relatively narrower portion adjacent the penetrating foot.

The sea bed penetrating support foot structure is preferably positioned directly below the tidal turbine nacelle structure.

In a further aspect, the invention provides a sea bed mounted tidal energy generation structure including one or more sea bed penetrating support foot structures including a penetrating tip which is arranged to penetrate into the sea bed surface under the weight of the structure.

The energy generation structure preferably has a generally triangular frame, and the structure is provided with three penetrating support foot structures, preferably spaced at the apexes of the triangular frame.

According to a further aspect, the invention provides a method of securing a tidal energy generation structure in position on the sea bed, the method comprising lowering the structure into position on the sea bed such that a respective penetrating tip of one or more support foot structures penetrates into the sea bed to a significant degree.

The depth of penetration required will be dependent on the shape of the foot and the type and strength of the seabed material. The significant degree to which the tip penetrates is preferably to a depth of > 100mm. A range of penetration of between 50mm for medium strong rock (35MPa) and 540mm for very weak rock (1.5MPa) can be expected.

In a preferred realisation, the tidal energy generation structure is preferably provided with a plurality of spaced support foot structures, each having a respective penetrating tip of one or more support foot structures penetrates into the sea bed to a significant degree.

The invention will now be described in a specific embodiment, by way of example only, and with reference to the accompanying drawings.

### Brief description of the drawings

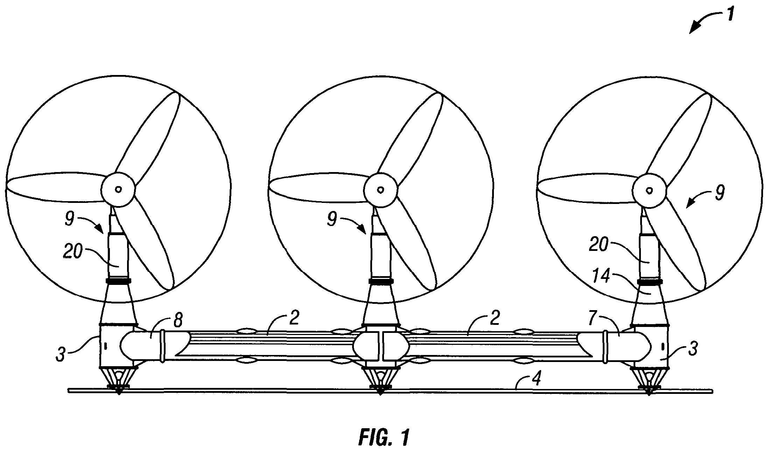

Figure 1 is a schematic side view representation of a tidal flow turbine structure in accordance with the invention;

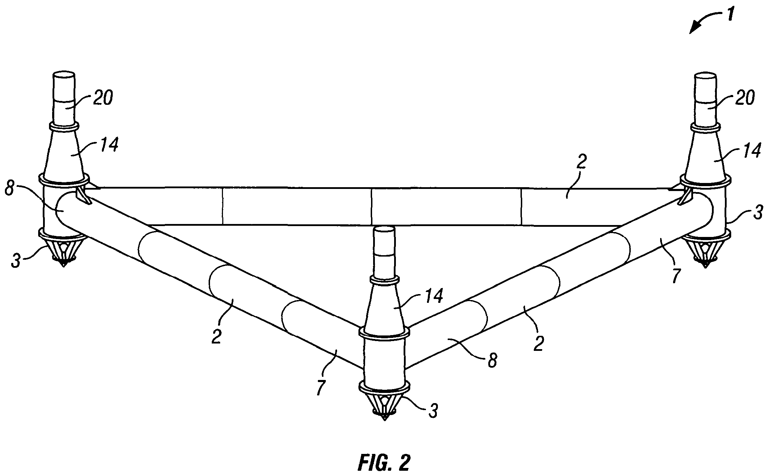

Figure 2 is a perspective view representation of the tidal flow turbine structure of figure 1;
Figure 3 is a side view of the support foot structure of the side tidal flow turbine structure of figures 1 and 2;
Figure 4 is a close up view of the foot structure.

### Detailed Description of the preferred Embodiments

Referring to the drawings there is shown a tidal flow energy generation structure 1, which is required to be deployed and operate in extreme conditions. To be commercially competitive with other forms of power production areas of the seabed of high tidal flow energy concentration need to be utilised. These areas are difficult and dangerous to work in and the structure and its deployment and retrieval need to take into account significant environmental hazards. The current flow, for example, is fast, typically upward of 4 Knots. Areas are often in deep water, which may be deeper than those in which a piling rig can operate. Storm conditions can cause costly delays and postponement. Tidal reversal is twice a day and the time between tidal reversal may be very short (for example between 10 and 90 minutes). Additionally, in such high tidal flow areas, the seabed is often scoured of sediment and other light material revealing an uneven rock seabed, which makes anchorage difficult. In the situations described it may be difficult and risky for divers or remote operated vehicles to operate on the structure when positioned on the seabed. Installation, recovery and service are therefore most conveniently carried out from the surface. To be environmentally acceptable, all parts of the structure and any equipment used in deployment or recovery must be shown to be recoverable.

The tidal flow energy generation structure 1 comprises a freestanding structural frame assembly comprising steel tubes 2. The frame assembly comprises welded tubular steel corner modules 3. The corner units are interconnected by lengths of the steel tubes 2. The structure as shown in the drawings is triangular in footprint and this may for certain deployment scenarios be preferred however other shape footprints (such as rectangular) are also envisaged in such arrangements the angular configuration of the corner modules 3 will of course be different to that shown and described in relation to the drawings. The use of a triangular, 3 corner module construction has advantages in the stability of three point contact on the sea bed.

The corner modules 3 comprise first and second angled limbs 7, 8 extending at an angle of 60 degrees to one another. The respective corner module 3 includes a mount 14 to receive and locate a shaft 20 of a respective nacelle 9. The corner module 3 and interconnecting tubes 2 include respective flanges for bolting to one another. The tubes 2 may be configured to permit water to flood into and drain out of the tubes 2 which enables in sinking of the structure to deploy on the sea bed and pumping out for lifting.

The structure is held in position by its own mass and lack of buoyancy due to flooding of the tubes 2 and end modules 3. The tubes 2 are positioned in the boundary layer close to the seabed and the structure has a large base area relative to height. This minimises potential overturning moment. Horizontal drag is minimised due to using single large diameter tubes 2 as the main interconnecting support for the frame. As an alternative to hollow tubes, solid frame beams of metal construction may be used.

The structure forms a mounting base for the turbines 9 mounted at each corner module 3, the support shaft 20 of a respective turbine 9 being received within the respective nacelle structure 14 such that the turbines can rotate about the longitudinal axis of the respective support shaft 20. The turbine shaft mounting bearings and other power generation components can be housed within the nacelle structures 14, such that it is only required to mount the shaft into the pre-assembled generation structure when positioned on the sea bed. Power is transmitted from the corner mounted turbines 19 to onshore by means of appropriate cable as is well known in the marine renewables industry.

Areas of deep water and high current and low visibility are very hazardous for divers. The structure is designed to be installed and removed entirely from surface vessels. The structure is designed to be installed onto a previously surveyed site in the time interval that represents slack water between the ebb and flood of the tide. This time may vary from 10 to 90 minutes. The unit may be restricted from being deployed outside the timeframe as the drag on the structure from water movement could destabilise the surface vessel.

In times of extremely high tidal flow velocities, there is a risk with a freestanding structure of this type that the axial loading on the turbines 9 can be so high that the structure could shift on the underlying seabed. This would have numerous undesirable consequences, including tension being placed on cables and the like.

In order to ensure that when deployed the structure remains firmly anchored in place, sea bed penetrating support foot structures 15 are utilised including a penetrating tip which is arranged to penetrate into the sea bed to a significant degree under the weight of the tidal energy generation structure, in accordance with the invention.

The sea bed penetrating support foot structure 15 as shown in the drawings has a generally triangular tip plate 26 welded to a horizontal disc 31, the disc 31 being connected below the corner module 3 by welded support stanchions 36 which define a spacing section above disc 31. The triangular tip plate 26 is braced by support plates 32 welded to the tip plate 26 and the disc 31. The inclined sides 41, 42 of the tip plate 26 are typically inclined at a mutual angle of 60 degrees to meet at a vertex 43. The smaller the apex angle between the opposed inclined surfaces, the more significant is the penetration. Accordingly, the apex angle between the opposed inclined surfaces is preferably 70 degrees or less (more preferably 60 degrees or less).

As has previously been identified, a key aspect of the invention is that the structure can be deployed quickly (for example during slack water) and without extensive preparation to the sea bed. This is achieved by using the structure's own weight to anchor the structure in place. A large footprint area for the tidal energy generation structure 1 (and triangular footprint) aid in the robust positioning of the structure. The respective foot structures pre-assembled with the structure, the support foot structures being fixed in position relative to the structure before lowering to the sea bed. This requires minimum further adjustment post deployment in the short time available. Furthermore, because the weight of the entire structure is used to embed the penetrating foot 15 into the sea bed there is no requirement for the penetrating foot structure 15 itself to be particularly massive or heavy. This benefit is not disclosed in the prior art, and enables the penetrating tip to be made of a metal plate construction, for example.

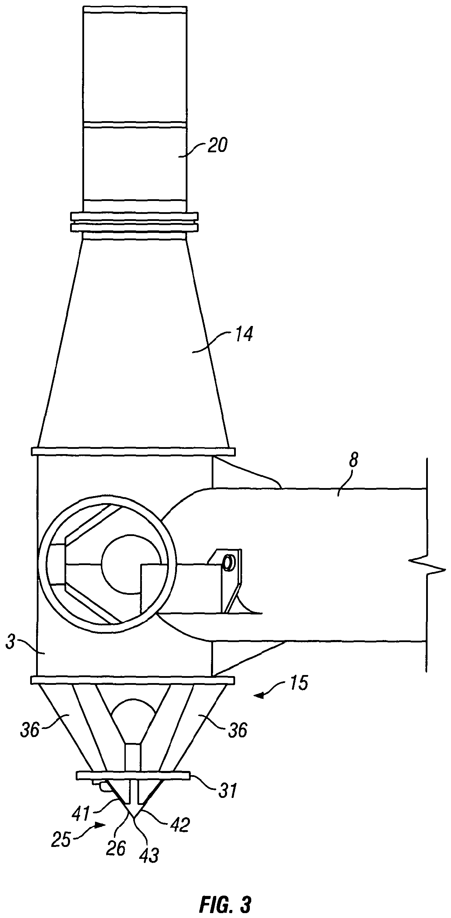

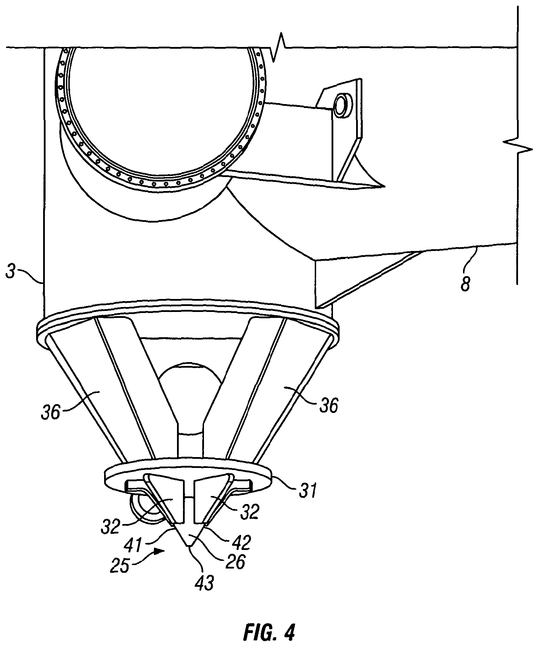

The sea bed penetrating support foot structure 15 is shown most clearly in figures 3 and 4. The sea bed penetrating support foot structure 15 includes a penetrating tip 25 which is designed to penetrate into the sea bed surface under the weight of the structure 1 as the structure 1 is deployed. In the embodiment shown, each corner module 5 is provided with a separate, identical sea bed penetrating support foot structure 15, providing 3 points of contact. These relatively few points of contact enables sufficient weight to be transferred via the respective sea bed penetrating support foot structure 15 to enable the penetrating tip 25 to break the sea bed surface, and sink into the material of the sea bed, in order to anchor the structure 1. This design is contrary to the way in which conventional structures are mounted to the sea bed in which prepared foundations are typically utilised and the setting area of the surface foundation would be as large as possible in order to minimise the pressure on the foundation (to avoid degradation of the foundation).

The welded support stanchions 36 which define the spacing section above the penetration limitation flange or disc 3, can sink into sedimentary deposits to provided added fixing of the structure in position. The welded support stanchions 36 which define the spacing section taper from a relatively wider upper portion to a relatively narrower portion at the penetration limitation flange or disc 3.

The design of the sea bed penetrating support foot structure 15 provides that when the tidal energy generation structure has been deployed on the sea bed, the sea bed penetrating support foot structure 15 ensures that the penetrating tip plate 26 breaks the surface and penetrates to a significant degree. The sea bed penetrating support foot structure 15 then provides significant resistance to lateral motion of the structure over the sea bed. The penetration depth is typically at least 100mm.

The inclined nature of the surfaces 41, 42, combined with the reversing directional forces acting as a result of the cyclic tidal flow reversal, mean that over time, the side to side 'rocking' of the structure (as a result of the cyclic tidal flow reversal) results in the tip plate penetrating deeper into the sea bed, and hence more securely locking the structure against lateral motion over the sea bed. The plate 31 provides a penetration depth limitation means to prevent the tip penetrating beyond a predetermined distance into the sea bed. Alternatively other means such as a stop, flange or plate could be used for this purpose.

The invention provides for a largely preassembled structure for mounting several turbines, in which the weight of the structure acts to ensure penetration of spaced penetration foot structures sufficiently to mount the structure in place. The pre-assembled structure utilises pre-assembled frame connected nacelle structures provided with respective penetrating feet pre-assembled prior to lowering to the sea-bed.

## Claims

1. A tidal energy generation structure (1) for sea bed mounting having a plurality of sea bed penetrating support foot structures (15) pre-assembled with the structure and deployed with the structure when setting on the sea-bed, the sea bed penetrating support foot structures (15) being assembled in fixed position relative to one another on a rigid frame and including a respective penetrating tip (25) which is arranged to penetrate into the sea bed surface under the weight of the tidal energy generation structure (1), when deployed on the sea bed, wherein the penetrating tip (25) comprises a generally triangular plate having an apex, wherein the sea bed penetrating support foot structure (15) includes penetration depth limitation means to prevent the tip (26) penetrating beyond a predetermined distance into the sea bed, wherein the penetration depth limitation means comprises a stop, flange disc or plate positioned above the penetrating tip (25) and extending outwardly from the penetrating tip (25) at a position spaced upwardly from the tip (26).

2. A tidal energy generation structure (1) according to claim 1, wherein the structure (1) is pre-assembled comprising frame connected nacelle structures (14) and a plurality of sea bed penetrating support foot structures (15) pre-assembled with the structure, the support foot structures (15) being fixed in position relative to the structure before lowering to the sea bed

3. A tidal energy generation structure (1) according to claim 2, wherein the structure (1) is provided with a spaced support foot structure beneath each frame connected nacelle (14), each having a respective penetrating tip which penetrates into the sea bed to a significant degree.

4. A tidal energy generation structure according to any preceding claim, wherein the sea bed penetrating support foot structure penetrating tip (25) has opposed inclined surfaces terminating at an apex.

5. A tidal energy generation structure according to claim 4 wherein the sea bed penetrating support foot structure apex angle between the opposed inclined surfaces is 70 degrees or less.

6. A tidal energy generation structure according to claim 5 wherein the sea bed penetrating support foot structure apex angle between the opposed inclined surfaces is 60 degrees or less.

7. A tidal energy generation structure according to any preceding claim, wherein the structure comprises a spacer section provided above the sea bed penetrating support foot structure.

8. A tidal energy generation structure according to claim 7, wherein the spacer section is provided above the penetration depth limitation means.

9. A tidal energy generation structure according to claim 7 or claim 8, wherein the spacer section tapers from a relatively wide upper portion to a relatively narrower portion adjacent the sea bed penetrating support foot structure.

10. A sea bed mounted tidal energy generation structure (1) according to any preceding claim, wherein the energy generation structure (1) has a generally triangular frame, and the structure is provided with three penetrating support foot structures (15), preferably spaced at the apexes of the triangular frame.

11. A method of securing a sea bed mounted tidal energy generation structure (1) in position on the sea bed, the method comprising lowering a pre-assembled structure comprising frame connected nacelle structures (14) and a plurality of sea bed penetrating support foot structures (15) pre-assembled with the structure, the support foot structures (15) being fixed in position relative to the structure before lowering to the sea bed and including a penetrating tip (25) which is arranged to penetrate into the sea bed to a significant degree under the weight of the tidal energy generation structure, wherein the sea bed mounted tidal energy generation structure (1) is provided with a plurality of spaced support foot structures beneath each frame connected nacelle (9), wherein each spaced support foot structure comprises a respective penetrating tip to enable each of the plurality of spaced support foot structures to penetrate into the sea bed to a significant degree, wherein the penetrating tip (25) comprises a generally triangular plate having an apex, wherein the spaced support foot structures include penetration depth limitation means comprising a stop, flange disc or plate positioned above the penetrating tip (25) and extending outwardly from the penetrating tip (25) at a position spaced upwardly from the tip.

## Patentansprüche

1. Gezeitenenergieerzeugungsstruktur (1) für ein Montieren auf einem Meeresboden, die eine Vielzahl von meeresbodendurchdringenden Stützfußstrukturen (15) aufweist, die mit der Struktur vorgefertigt werden und mit der Struktur installiert werden, wenn sie auf dem Meeresboden abgesetzt werden, wobei die meeresbodendurchdringenden Stützfußstrukturen (15) in einer festen Position relativ zueinander an einem festen Rahmen zusammengebaut werden und eine jeweilige Eindringspitze (25) umfassen, die angeordnet ist, um unter dem Gewicht der Gezeitenenergieerzeugungsstruktur (1) in die Meeresbodenoberfläche einzudringen, wenn sie auf dem Meeresboden installiert werden, wobei die Eindringspitze (25) eine im Allgemeinen dreieckige Platte umfasst, die eine Kegelspitze umfasst, wobei die meeresbodendurchdringende Stützfußstruktur (15) ein Eindringtiefenbegrenzungselement umfasst, um zu verhindern, dass die Spitze (26) über einen vorbestimmten Abstand hinaus in den Meeresboden eindringt, wobei das Eindringtiefenbegrenzungselement einen Stopper, eine Flanschscheibe oder -platte umfasst, die über der Eindringspitze (25) angebracht ist und sich in einer nach oben von der Spitze (26) beabstandeten Position von der Eindringspitze (25) nach außen erstreckt.

2. Gezeitenenergieerzeugungsstruktur (1) nach Anspruch 1, wobei die vorgefertigte Struktur (1) rahmengestützte Gondelstrukturen (14) und eine Vielzahl von meeresbodendurchdringenden Stützfußstrukturen (15) umfasst, die mit der Struktur zusammen vorgefertigt werden, wobei die Stützfußstrukturen (15) an ihrem Bestimmungsort relativ zur Struktur befestigt werden, bevor sie auf den Meeresboden abgesenkt werden.

3. Gezeitenenergieerzeugungsstruktur (1) nach Anspruch 2, wobei die Struktur (1) unter jeder rahmengestützten Gondel (14) mit einer beabstandeten Stützfußstruktur bereitgestellt wird, wobei jede eine entsprechende Eindringspitze aufweist, die bis zu einer bedeutenden Tiefe in den Meeresboden eindringt.

4. Gezeitenenergieerzeugungsstruktur nach einem der vorhergehenden Ansprüche, wobei die Eindringspitze (25) der meeresbodendurchdringenden Stützfußstruktur einander gegenüberliegende geneigte Oberflächen aufweist, die in einer Kegelspitze enden.

5. Gezeitenenergieerzeugungsstruktur nach Anspruch 4, wobei der Kegelspitzenwinkel der meeresbodendurchdringenden Stützfußstruktur zwischen den einander gegenüberliegenden geneigten Oberflächen 70 Grad oder geringer ist.

6. Gezeitenenergieerzeugungsstruktur nach Anspruch 5, wobei der Kegelspitzenwinkel der meeresbodendurchdringenden Stützfußstruktur zwischen den einander gegenüberliegenden geneigten Oberflächen 60 Grad oder geringer ist.

7. Gezeitenenergieerzeugungsstruktur nach einem der vorhergehenden Ansprüche, wobei die Struktur einen Abstandhalterabschnitt umfasst, der oberhalb der meeresbodendurchdringenden Stützfußstruktur bereitgestellt wird.

8. Gezeitenenergieerzeugungsstruktur nach Anspruch 7, wobei der Abstandhalterabschnitt oberhalb des Eindringtiefenbegrenzungselements bereitgestellt wird.

9. Gezeitenenergieerzeugungsstruktur nach Anspruch 7 oder Anspruch 8, wobei sich der Abstandhalterabschnitt von einem relativ breiten oberen Abschnitt zu einem relativ schmaleren unteren Abschnitt in der Nähe der meeresbodendurchdringenden Stützfußstruktur verjüngt.

10. Auf dem Meeresboden montierte Gezeitenenergieerzeugungsstruktur (1) nach einem der vorhergehenden Ansprüche, wobei die Energieerzeugungsstruktur (1) einen im Allgemeinen dreieckigen Rahmen aufweist und wobei die Struktur mit drei Eindringstützfußstrukturen (15) bereitgestellt wird, die vorzugsweise an den Spitzen des dreieckigen Rahmens in einem Abstand voneinander angebracht sind.

11. Verfahren zum Befestigen einer auf dem Meeresboden montierten Gezeitenenergieerzeugungsstruktur (1) am Bestimmungsort auf dem Meeresboden, wobei das Verfahren ein Absenken einer vorgefertigten Struktur umfasst, welche rahmengestützte Gondelstrukturen (14) und eine Vielzahl von meeresbodendurchdringenden Stützfußstrukturen (15) umfasst, die mit der Struktur zusammen vorgefertigt sind, wobei die Stützfußstrukturen (15) an ihrem Bestimmungsort relativ zur Struktur befestigt werden, bevor sie auf den Meeresboden abgesenkt werden, und eine Eindringspitze (25) umfassen, die angeordnet ist, um unter dem Gewicht der Gezeitenenergieerzeugungsstruktur bis zu einer bedeutenden Tiefe in den Meeresboden einzudringen, wobei die auf dem Meeresboden montierte Gezeitenenergieerzeugungsstruktur (1) mit einer Vielzahl von voneinander beabstandeten Stützfußstrukturen unter jeder rahmengestützten Gondel (9) bereitgestellt wird, wobei jede beabstandete Stützfußstruktur eine jeweilige Eindringspitze umfasst, um jeder der Vielzahl von voneinander beabstandeten Stützfußstrukturen zu ermöglichen in den Meeresboden bis zu einer bedeutenden Tiefe einzudringen, wobei die Eindringspitze (25) eine im Allgemeinen dreieckige Platte umfasst, die eine Kegelspitze umfasst, wobei die voneinander beabstandeten Stützfußstrukturen jeweils ein Eindringtiefenbegrenzungselement aufweisen, das einen Stopper, eine Flanschscheibe oder -platte umfasst, die über der Eindringspitze (25) angebracht ist und sich in einer nach oben von der Spitze beabstandeten Position von der Eindringspitze (25) nach außen erstreckt.

## Revendications

1. Structure de production d'énergie marémotrice (1) destinée à être montée sur un fond marin, comprenant une pluralité de structures de pied support pénétrant le fond marin (15) préassemblées avec la structure et déployées avec la structure lors de la mise en place sur le fond marin, les structures de pied support pénétrant le fond marin (15) étant assemblées dans une position fixe les unes par rapport aux autres sur un cadre rigide et comprenant une pointe pénétrante (25) respective conçue pour pénétrer dans la surface du fond marin sous le poids de la structure de production d'énergie marémotrice (1) lorsqu'elles sont déployées sur le fond marin, la pointe pénétrante (25) comprenant une plaque généralement triangulaire ayant un sommet, la structure de pied support pénétrant le fond marin (15) comprenant un moyen de limitation de profondeur de pénétration qui empêche la pointe (26) de pénétrer dans le fond marin au-delà d'une distance prédéterminée, le moyen de limitation de profondeur de pénétration comprend un disque ou plaque faisant bride d'arrêt positionnée au-dessus de la pointe pénétrante (25) et s'étendant vers l'extérieur à partir de la pointe pénétrante (25) au niveau d'une position espacée vers le haut à partir de la pointe (26).

2. Structure de production d'énergie marémotrice (1) selon la revendication 1, la structure (1) étant préassemblée et comprenant des structures de nacelle connectées au cadre (14) et une pluralité de structures de pied support pénétrant le fond marin (15) préassemblées avec la structure, les structures de pied support (15) étant fixées en position par rapport à la structure avant d'être abaissées sur le fond marin.

3. Structure de production d'énergie marémotrice (1) selon la revendication 2, la structure (1) étant munie d'une structure de pied support espacée sous chaque nacelle connectée au cadre (14), ayant chacune une pointe pénétrante respective qui pénètre dans le fond marin dans une large mesure.

4. Structure de production d'énergie marémotrice selon l'une quelconque des revendications précédentes, dans laquelle la pointe pénétrante (25) des structures de pied support pénétrant le fond marin a des surfaces opposées inclinées se terminant au niveau d'un sommet.

5. Structure de production d'énergie marémotrice selon la revendication 4, dans laquelle l'angle du sommet des structures de pied support pénétrant le fond marin entre les surfaces opposées inclinées est inférieur ou égal à 70 degrés.

6. Structure de production d'énergie marémotrice selon la revendication 5, dans laquelle l'angle du sommet des structures de pied support pénétrant le fond marin entre les surfaces opposées inclinées est inférieur ou égal à 60 degrés.

7. Structure de production d'énergie marémotrice selon l'une quelconque des revendications précédentes, la structure comprenant une section d'espacement située au-dessus de la structure de pied support pénétrant le fond marin.

8. Structure de production d'énergie marémotrice selon la revendication 7, dans laquelle la section d'espacement est située au-dessus du moyen de limitation de profondeur de pénétration.

9. Structure de production d'énergie marémotrice selon la revendication 7 ou 8, dans laquelle la section d'espacement est à section décroissante d'une partie supérieure relativement large à une partie relativement plus étroite adjacente à la structure de pied support pénétrant le fond marin.

10. Structure de production d'énergie marémotrice à montage sur fond marin (1) selon l'une quelconque des revendications précédentes, la structure de production d'énergie (1) ayant un cadre généralement triangulaire, et la structure étant munie de trois structures de pied support pénétrant le fond marin (15), de préférence espacées au niveau des sommets du cadre triangulaire.

11. Procédé de fixation d'une structure de production d'énergie marémotrice à montage sur fond marin (1) en position sur le fond marin, le procédé consistant à abaisser une structure préassemblée comprenant des structures de nacelle connectées à un cadre (14) et une pluralité de structures de pied support pénétrant le fond marin (15) préassemblées avec la structure, les structures de pied support (15) étant fixées en position par rapport à la structure avant d'être abaissées sur le fond marin et comprenant une pointe pénétrante (25) conçue pour pénétrer dans le fond marin dans une large mesure sous le poids de la structure de production d'énergie marémotrice, la structure de production d'énergie marémotrice à montage sur fond marin (1) étant munie d'une pluralité de structures de pied support espacées sous chaque nacelle connectée au cadre (9), chaque structure de pied support espacée comprenant une pointe pénétrante respective pour permettre à chaque structure de la pluralité de structures de pied support espacées de pénétrer dans le fond marin dans une large mesure, la pointe pénétrante (25) comprenant une plaque généralement triangulaire ayant un sommet, les structures de pied support espacées comprenant un moyen de limitation de profondeur de pénétration comprenant un disque ou plaque faisant bride d'arrêt positionnée au-dessus de la pointe pénétrante (25) et s'étendant vers l'extérieur à partir de la pointe pénétrante (25) au niveau d'une position espacée vers le haut à partir de la pointe.
